# EUROPÄISCHE PATENTSCHRIFT

(11) **EP 2 276 941 B1**
(45) Veröffentlichungstag und Bekanntmachung des Hinweises auf die Patenterteilung: **24.10.2012**
(21) Anmeldenummer: 09737862.4
(22) Anmeldetag: 28.04.2009
(51) Int. Cl.: F16C 35/077

(54) **VERFAHREN ZUR HERSTELLUNG EINES LAGERTRÄGERS FÜR EIN LAGER**
METHOD FOR PRODUCING A BEARING CARRIER FOR A BEARING
PROCÉDÉ DE FABRICATION D'UN SUPPORT DE PALIER

(30) Priorität: 30.04.2008 DE 102008021832
(43) Veröffentlichungstag der Anmeldung: 26.01.2011
(73) Patentinhaber: AB SKF, 415 50 Göteborg (SE)
(72) Erfinder: SCHNEIDER, Jürgen, 97720 Nüdlingen (DE)
(74) Vertreter: Schonecke, Mitja
(86) Internationale Anmeldenummer: PCT/EP2009/003071
(87) Internationale Veröffentlichungsnummer: WO 2009/132818

(56) Entgegenhaltungen:
- DE-U1- 20 019 278
- US-A1- 2006 210 209

## Beschreibung

Die Erfindung betrifft ein Verfahren zur Herstellung eines Lagerträgers für ein Lager, wobei der Lagerträger aus einem Blech besteht, in das eine kreisförmige Ausnehmung zur Aufnahme des Außenrings des Lagers eingebracht ist, und wobei die Ausnehmung einen Grundradius aufweist.

Aus einem Blech geformte Lagerträger werden beispielsweise benötigt, um in einem PKW-Getriebe Getriebewellen zu lagern. Hierzu ist ein Ausgangsteil in Form eines Blechs vorgesehen, das durch Stanz- und Umformvorgänge zum Lagerträger geformt wird. Dabei kann es wünschenswert sein, eine Fixierung des Lagers am Lagerträger so zu bewerkstelligen, dass in den Außenring des Lagers eine Ringnut eingearbeitet wird; in diese sollen sich radial vorspringende Fortsätze am Lagerträger hinein erstrecken, wobei die Fortsätze zusammen mit der Ringnut im Lagerring eine Schnappverbindung bilden. Diese kann genutzt werden, um das Lager samt Lagerträger vorzumontieren, bis das Lager durch andere Mittel endgültig festgelegt wird.

Eine Lageranordnung der genannten Art offenbart die US 2006/0210209 A1 und die DE 200 19 278 U1.

Die Fortsätze am Lagerträger, die sich über eine Bohrung zur Aufnahme des Lageraußenrings radial nach innen erstrecken, können durch einen Prägevorgang bzw. Verstemmvorgang hergestellt werden. Problematisch ist es dabei, dass es sehr schwierig ist, in der Großserienfertigung eine enge Toleranz für die Größe der Vorsprünge sicherzustellen. Zwangsläufig ergeben sich Toleranzen, die die Qualität der Schnappverbindung zwischen Lagerträger und Lageraußenring beeinflussen.

Der Erfindung liegt daher die Aufgabe zu Grunde, ein Verfahren der eingangs genannten Art so fortzubilden, dass auch in der Großserienfertigung eine stets hohe und gleich bleibende Qualität der Bauteile hinsichtlich ihrer Form sichergestellt ist. Namentlich sollen sich die Fortsätze am Lagerträger, die für die Herstellung der Schnappverbindung zwischen Lagerträger und Lageraußenring benötigt werden, stets innerhalb eines engen Toleranzrahmens bleiben.

Die Lösung dieser Aufgabe durch die Erfindung ist verfahrensgemäß dadurch gekennzeichnet, dass das Verfahren die Schritte aufweist:
a) vor dem Einbringen der Ausnehmung: Einprägen einer Vertiefung an mindestens einer Umfangsstelle der Ausnehmung, wobei die Vertiefung einen axial tiefer liegenden ersten Bereich und einen axial höher liegenden zweiten Bereich aufweist, wobei der axial tiefer liegende erste Bereich den axial höher liegenden zweiten Bereich zumindest teilweise, insbesondere bogenförmig, umgibt und wobei sich der axial höher liegende zweite Bereich von einer radial außenliegenden Stelle radial über den Grundradius bis zu einer radial innenliegenden Stelle erstreckt;
b) Einbringen der Ausnehmung;
c) Umformen des am Lagerträger verbliebenen axial höher liegenden zweiten Bereichs durch Aufbringen einer axial wirksamen Umformkraft, so dass zumindest ein Teil des verbliebenen zweiten Bereichs über den Grundradius der Ausnehmung radial nach innen verdrängt wird und einen Vorsprung bildet.

Dabei ist bevorzugt vorgesehen, dass gemäß Schritt a) eine Anzahl von Vertiefungen um den Umfang der Ausnehmung herum eingeprägt wird. Die Vertiefungen sind dabei bevorzugt äquidistant um den Umfang der Ausnehmung herum angeordnet.

Der axial tiefer liegende erste Bereich kann eine kreisförmige oder ovale äußere Begrenzung aufweisen. Der axial höher liegende zweite Bereich kann indes eine längliche, radial ausgerichtete Begrenzung aufweisen.

Die Einbringung der Ausnehmung erfolgt bevorzugt durch einen Stanzvorgang.

Vor dem Einprägen einer Vertiefung gemäß obigem Schritt a) kann in einen radial innerhalb des Grundradius liegenden Teil des Blechs ein Durchbruch eingearbeitet werden. Damit kann der Materialfluss beeinflusst werden. Das Einarbeiten des Durchbruchs erfolgt dabei bevorzugt durch einen Stanzvorgang. Der Durchbruch dehnt sich dabei in Umfangsrichtung vorzugsweise über die gesamte Erstreckung des axial tiefer liegenden ersten Bereichs aus.

Die am Lagerträger verbliebenen ersten und zweiten Bereiche können nach der Durchführung des obigen Schritts c) eine gemeinsame ebene Oberfläche bilden.

Vor dem Einbringen der Ausnehmung nach obigem Schritt b) kann fortbildungsgemäß in den axial höher liegenden zweiten Bereich eine Einprägung eingearbeitet werden, die radial innerhalb des Grundradius angeordnet ist und die mit ihrem radial äußeren Rand an den Grundradius angrenzt. Damit wird eine scharfe Kante beim Ausstanzen der Ausnehmung erhalten.

Die vorgeschlagene Lageranordnung besteht aus einem Lagerträger und mindestens einem Lager, wobei der Lagerträger aus einem Blech besteht, in das eine kreisförmige Ausnehmung mit einem Grundradius zur Aufnahme des Außenrings des Lagers eingebracht ist. Ferner ist vorgesehen, dass der Lagerträger nach obigem Verfahren hergestellt ist und mindestens einen sich radial nach innen über den Grundradius hinaus erstreckenden und durch Materialverdrängung entstandenen Vorsprung aufweist, wobei der Außenring des Lagers eine Ringnut an seinem Außenumfang aufweist und wobei der Vorsprung des Lagerträgers und die Ringnut am Außenring eine Schnappverbindung bilden.

Vorzugsweise sind zwischen drei und sechs Vorsprünge am Umfang der Ausnehmung angeordnet. Diese sind bevorzugt über dem Umfang äquidistant angeordnet.

Schließlich kann vorgesehen werden, dass der Lagerträger gehärtet ist.

Mit der vorgeschlagenen Lösung wird erreicht, dass die Vorsprünge am Lagerträger, die zusammen mit der Ringnut im Außenring eine Schnappverbindung bilden, stets innerhalb eines engen Toleranzfeldes liegen, was ihre Größe anbelangt. Demgemäß kann die Schnappverbindung zwischen dem Lagerträger und dem Lager in gleichbleibender Qualität gefertigt werden.

Die vorgeschlagene Vorgehensweise ermöglicht den Einsatz eines größeren Stempels und damit eine stabilere Fertigung. Bei vorbekannten Lösungen musste mit sehr kleinen, filigranen Stempeln gearbeitet werden, so dass das Arbeitsergebnis stärkeren Toleranzen unterlag.

Durch den Umformprozess, mit dem die Vorsprünge erzeugt werden, kann ein solches Eindrücken des Materials erfolgen, dass am radial nach innen gerichteten Ende des Vorsprungs kein Span gebildet wird, sondern eine definierte Ausformung mit eng tolerierter Geometrie.

In der Zeichnung sind Ausführungsbeispiels der Erfindung dargestellt. Es zeigen:
- Fig. 1: die Draufsicht auf ein Blech, aus dem ein Lagerträger gefertigt werden soll, nach einem ersten Verfahrensschritt der Herstellung,
- Fig. 2: den Schnitt W-W gemäß Fig. 1,
- Fig. 3: die Draufsicht auf das Blech des Lagerträgers nach einem zweiten Verfahrensschritt der Herstellung, wenn nämlich die Ausnehmung für den Lageraußenring ausgestanzt ist,
- Fig. 4: den Schnitt X-X gemäß Fig. 3,
- Fig. 5: die Draufsicht auf das Blech des Lagerträgers, der gemäß einer alternativen Ausführungsform des erfindungsgemäßen Verfahrens gefertigt wird,
- Fig. 6: den Schnitt Y-Y gemäß Fig. 5,
- Fig. 7: den fertigen Lagerträger in perspektivischer Darstellung,
- Fig. 8: die Draufsicht auf eine fertig montierte Lageranordnung, bestehend aus dem Lagerträger und einem Lager,
- Fig. 9: den Radialschnitt Z-Z gemäß Fig. 8 durch die Lageranordnung und
- Fig. 10: die Einzelzeit V gemäß Fig. 9.

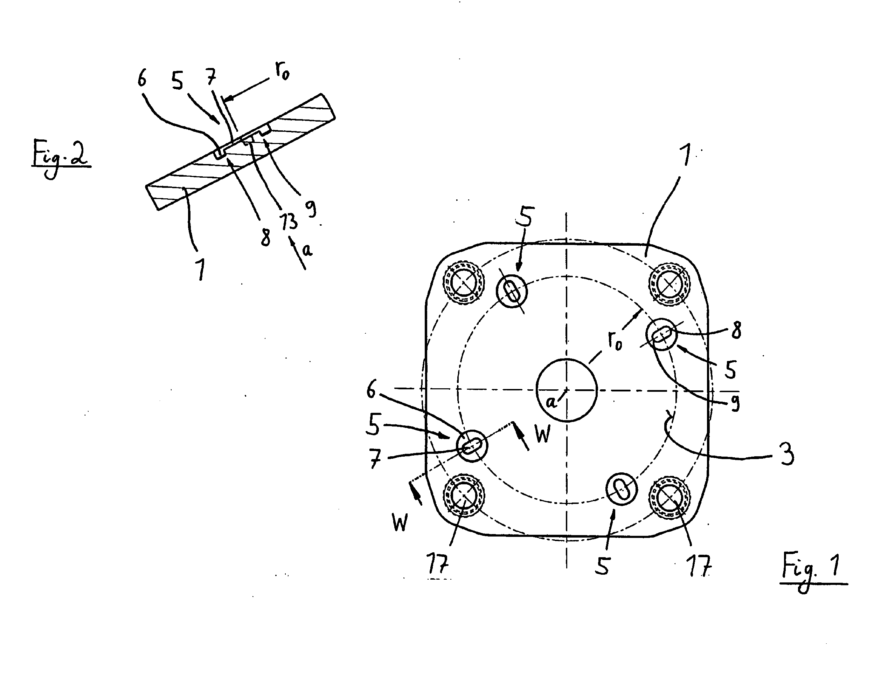

In Fig. 1 und Fig. 2 ist ein Blech zu sehen, aus dem ein Lagerträger 1 gefertigt werden soll. Das Blech hat im wesentlichen eine quadratische Grundform (s. Fig. 1), wobei zentrisch eine Ausnehmung 3 vorgesehen ist, die in Fig. 1 noch nicht eingebracht ist. Die Ausnehmung 3 hat einen nominalen Grundradius r₀. Im Randbereich des Blechs können Befestigungsbohrungen 17 eingebracht sein.

In einem ersten Verfahrensschritt, der an dem Blech gemäß der Figuren 1 und 2 bereits vorgenommen wurde, sind eine Anzahl Vertiefungen 5 - nämlich vier über den Umfang gleichmäßig verteilte Vertiefungen 5 - in das Blech eingearbeitet, deren Form aus Fig. 2 hervorgeht. Die Vertiefungen sind mit einem (nicht dargestellten) Prägestempel eingebracht worden. Wie sich aus der Zusammenschau der Figuren 1 und 2 ergibt, haben die Vertiefungen 5 einen axial tiefer liegenden ersten Bereich 6, der eine kreisförmige äußere Begrenzung aufweist. Im Inneren dieses ersten Bereichs 6 liegt ein axial höher liegender zweiter Bereich 7, der länglich ausgebildet ist (s. Fig. 1) und der sich radial erstreckt.

Wesentlich ist, dass sich der axial höher liegende zweite Bereich 7 über den Bereich radial erstreckt, der durch den Grundradius r₀ definiert wird. Wie in Fig. 1 zu sehen ist, wird der axial höher liegende zweite Bereich 7 etwa durch den Verlauf des Grundradius r₀ halbiert. Der zweite Bereich 7 erstreckt sich nämlich von einer radial außenliegenden Stelle 8, die radial außerhalb des Grundradius r₀ liegt, bis zu einer radial innenliegenden Stelle 9, die radial innerhalb des Grundradius r₀ liegt.

Die tiefer bzw. höher liegenden Bereiche 6 und 7 sind hinsichtlich der Lage ihrer Oberflächen in axiale Richtung a (s. Fig. 1) so bezeichnet. Demgemäß liegt die Oberfläche des Bereichs 6 axial von der Blechoberfläche tiefer als die Oberfläche des Bereichs 7, wie es sich aus Fig. 2 klar ergibt.

Sind die Vertiefungen 5 in der erläuterten Weise in einem ersten Verfahrensschritt eingebracht, erfolgt in einem zweiten Schritt das Ausstanzen der Ausnehmung 3, d. h. das Ausstanzen der kreisförmigen Aufnahme für das Lager.

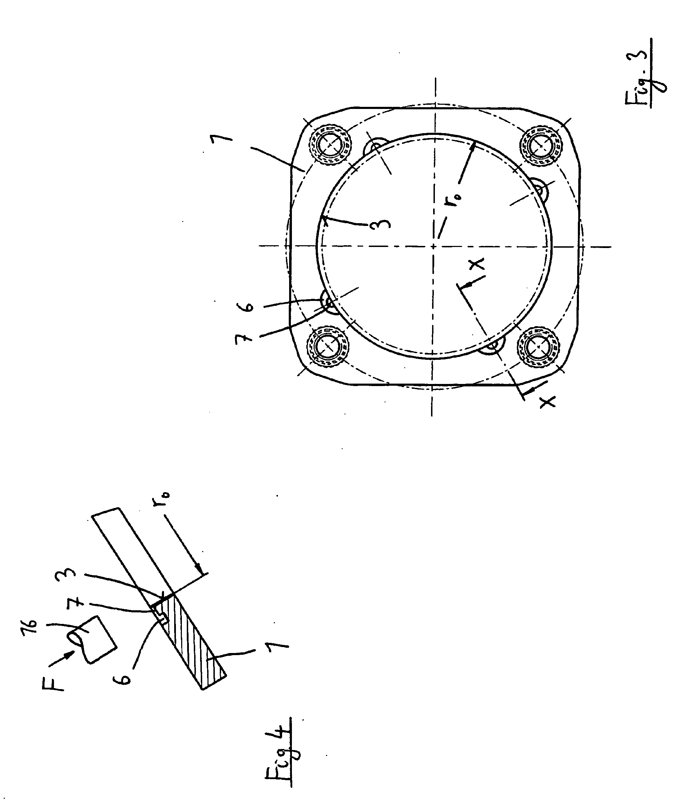

In den Figuren 3 und 4 ist zu sehen, welcher Status nach der Ausführung dieses Verfahrensschritts erreicht ist. Am Lagerträger 1 ist nunmehr nur noch ein Teil (etwa die Hälfte) der Vertiefung 5 mit den Bereichen 6 und 7 verblieben. An die Ausnehmung 3 grenzt nun der axial höher liegende zweite Bereich 7 an bzw. das, was von ihm nach dem Ausstanzen der Ausnehmung 3 noch verblieben ist (s. Fig.4).

Vorgesehen kann auch sein, dass eine Einprägung 13 in die Vertiefung 5 eingebracht wird, wie es in Fig. 2 mit gestrichelten Linien angedeutet ist. Diese Einprägung 13 ist dabei so positioniert, dass ihr radial äußerer Rand genau im Bereich des Grundradius r₀ liegt. Wird das Ausstanzen der Ausnehmung 3 vorgenommen, ergibt sich hierdurch eine scharfe Kante.

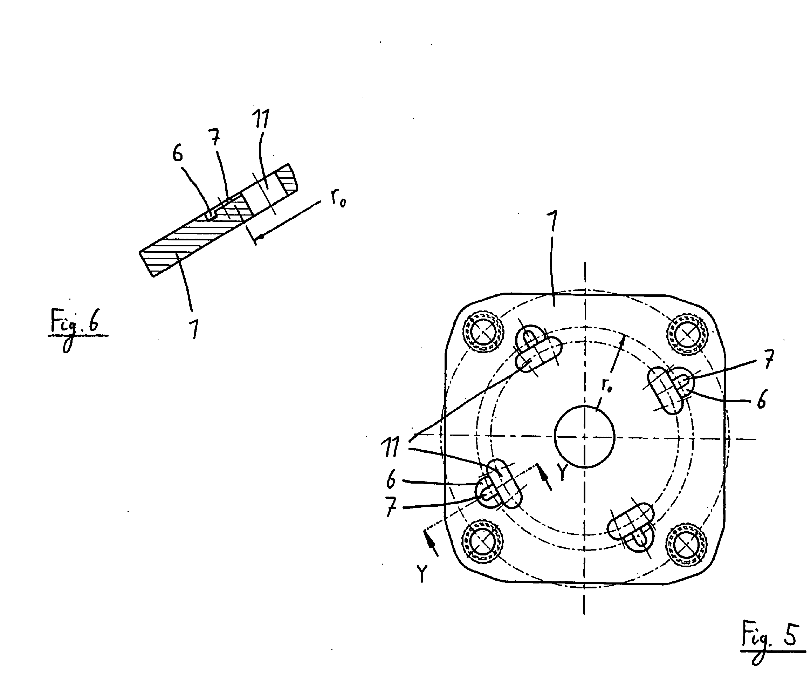

Eine weitere Verfahrensalternative besteht in der Lösung, wie sie in Fig. 5 und 6 gezeigt ist. Hier wurde vor der Einbringungen der Vertiefungen 5 ein Durchbruch 11 erzeugt, der das Blech des Lagerträgers 1 vollständig durchsetzt und der mit geringem Abstand vom Grundradius r₀ im radial innenliegenden Bereich angeordnet ist. Der Vorteil dieses Durchbruchs ist, dass mit ihm eine Steuerung des Materialflusses erfolgen kann, wenn nach seiner Einbringung die Vertiefungen 5 geprägt werden. Mit dem Durchbruch 11 kann eine gewisse "Ventilfunktion" erzeugt werden, was den Fluss des durch das Einprägen der Vertiefungen 5 verdrängten Materials anbelangt. Dies wird bei der sich anschließenden Prägeoperation genutzt.

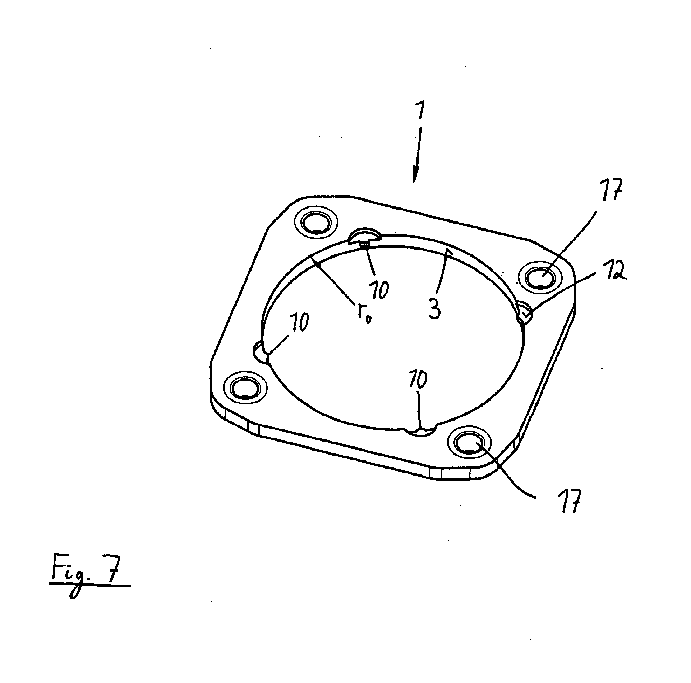

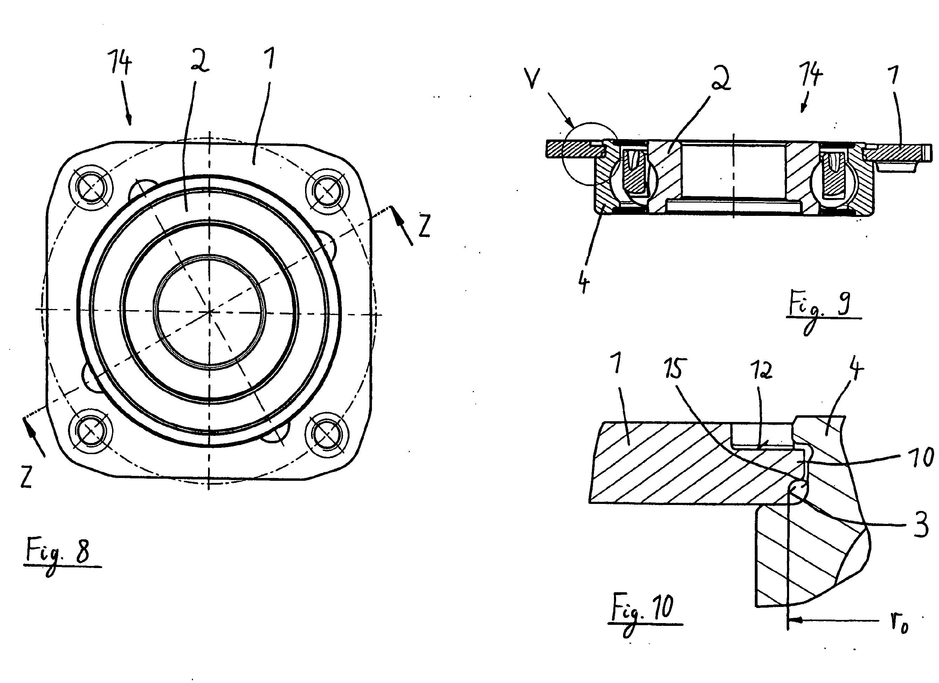

Ist der Verfahrensstatus gemäß Fig. 3 bzw. Fig. 5 erreicht, wird der axial höher liegende erste Bereich bzw. das, was von ihm nach der Ausstanzung der Ausnehmung 3 noch vorhanden ist, einer weiteren Prägeoperation unterzogen. Dies ist schematisch in Fig. 4 dargestellt. Ein Prägestempel 16 wird mit einer Umformkraft F beaufschlagt und auf die Oberfläche des axial höher liegenden zweiten Bereichs 7 gepresst. Die Folge ist eine gezielte Materialverdrängung, d. h. das Material des Bereichs 7, das über dem Bereich 6 vorhanden ist, wird durch den Prägestempel 16 verdrängt und zwar radial nach innen. Demgemäß bilden sich Vorsprünge 10 aus, wie es in Fig. 7 gezeigt ist. Nach der Durchführung des Prägevorgangs liegt im Ausführungsbeispiel eine ebene Oberfläche 12 der Vertiefung 5 vor (s. hierzu Fig. 10), d. h. die Bereiche 6 und 7 sind in der axialen Höhe nivelliert.

Durch das vorgeschlagene Vorgehen kann die Menge des verdrängten Materials recht genau gesteuert werden, so dass die Größe der Vorsprünge 10 innerhalb eines engen Toleranzbandes gehalten werden können.

In den Figuren 8 bis 10 ist eine Lageranordnung 14 zu sehen, die aus dem Lagerträger 1 besteht, in den ein Lager 2 eingebaut wurde. Das Lager 2 hat einen Außenring 4, der in einer äußeren Umfangsfläche eine Ringnut 15 aufweist (s. Fig. 10).

Durch die Vorsprünge 10 und die Ringnut 15 wird zwischen dem Lagerträger 1 und dem Lager 2 eine Schnappverbindung mit reproduzierbarer Qualität erzeugt, die geeignet ist, den Außenring 4 des Lagers 2 in den Lagerträger 1 einschnappen zu lassen. Der Außenring 4 ist im Lagerträger 1 dann zwar relativ verdrehbar angeordnet, allerdings verliersicher mit dem Lagerträger 1 verbunden.

Der Lagerträger 1 ist vorzugsweise "blind gehärtet", d. h. nach dem Härten erfolgt kein Anlassen. Die Härte der Oberfläche beträgt dabei bis 40 HRC.

### Bezugszeichenliste

- 1: Lagerträger
- 2: Lager (Wälzlager)
- 3: Ausnehmung (Ausstanzung)
- 4: Außenring
- 5: Vertiefung
- 6: axial tiefer liegender erster Bereich
- 7: axial höher liegender zweiter Bereich
- 8: radial außenliegende Stelle
- 9: radial innenliegende Stelle
- 10: Vorsprung
- 11: Durchbruch (Ausstanzung)
- 12: ebene Oberfläche
- 13: Einprägung
- 14: Lageranordnung
- 15: Ringnut
- 16: Prägestempel
- 17: Befestigungsbohrungen

- r₀: Grundradius
- F: Umformkraft
- a: axiale Richtung

## Patentansprüche

1. Verfahren zur Herstellung eines Lagerträgers (1) für ein Lager (2), wobei der Lagerträger (2) aus einem Blech besteht, in das eine kreisförmige Ausnehmung (3) zur Aufnahme des Außenrings (4) des Lagers (2) eingebracht ist, und wobei die Ausnehmung einen Grundradius (r₀) aufweist, **dadurch gekennzeichnet, dass** das Verfahren die Schritte aufweist:
a) vor dem Einbringen der Ausnehmung (3): Einprägen einer Vertiefung (5) an mindestens einer Umfangsstelle der Ausnehmung (3), wobei die Vertiefung (5) einen axial tiefer liegenden ersten Bereich (6) und einen axial höher liegenden zweiten Bereich (7) aufweist, wobei der axial tiefer liegende erste Bereich (6) den axial höher liegenden zweiten Bereich (7) zumindest teilweise, insbesondere bogenförmig, umgibt und wobei sich der axial höher liegende zweite Bereich (7) von einer radial außenliegenden Stelle (8) radial über den Grundradius (r₀) bis zu einer radial innenliegenden Stelle (9) erstreckt;
b) Einbringen der Ausnehmung (3);
c) Umformen des am Lagerträger (1) verbliebenen axial höher liegenden zweiten Bereichs (7) durch Aufbringen einer axial wirksamen Umformkraft (F), so dass zumindest ein Teil des verbliebenen zweiten Bereichs (7) über den Grundradius (r₀) der Ausnehmung (3) radial nach innen verdrängt wird und einen Vorsprung (10) bildet.

2. Verfahren nach Anspruch 1, **dadurch gekennzeichnet, dass** gemäß Schritt a) nach Anspruch 1 eine Anzahl von Vertiefungen (5) um den Umfang der Ausnehmung (3) herum eingeprägt wird.

3. Verfahren nach Anspruch 2, **dadurch gekennzeichnet, dass** die Vertiefungen (5) äquidistant um den Umfang der Ausnehmung (3) herum angeordnet werden.

4. Verfahren nach einem der Ansprüche 1 bis 3, **dadurch gekennzeichnet, dass** der axial tiefer liegende erste Bereich (6) eine kreisförmige oder ovale äußere Begrenzung aufweist.

5. Verfahren nach einem der Ansprüche 1 bis 4, **dadurch gekennzeichnet, dass** der axial höher liegende zweite Bereich (7) eine längliche, radial ausgerichtete Begrenzung aufweist.

6. Verfahren nach einem der Ansprüche 1 bis 5, **dadurch gekennzeichnet, dass** die Einbringung der Ausnehmung (3) durch einen Stanzvorgang erfolgt.

7. Verfahren nach einem der Ansprüche 1 bis 6, **dadurch gekennzeichnet, dass** vor dem Einprägen einer Vertiefung (5) gemäß Schritt a) nach Anspruch 1 in einen radial innerhalb des Grundradius (r₀) liegenden Teil des Blechs ein Durchbruch (11) eingearbeitet wird.

8. Verfahren nach Anspruch 7, **dadurch gekennzeichnet, dass** das Einarbeiten des Durchbruchs (11) durch einen Stanzvorgang erfolgt.

9. Verfahren nach Anspruch 7 oder 8, **dadurch gekennzeichnet, dass** sich der Durchbruch (11) in Umfangsrichtung über die gesamte Erstreckung des axial tiefer liegenden ersten Bereichs (6) ausdehnt.

10. Verfahren nach einem der Ansprüche 1 bis 9, **dadurch gekennzeichnet, dass** die am Lagerträger (1) verbliebenen ersten und zweiten Bereiche (6, 7) nach der Durchführung des Schritts c) gemäß Anspruch 1 eine gemeinsame ebene Oberfläche (12) bilden.

11. Verfahren nach einem der Ansprüche 1 bis 10, **dadurch gekennzeichnet, dass** vor der Einbringen der Ausnehmung (3) nach Schritt b) gemäß Anspruch 1 in den axial höher liegenden zweiten Bereich (7) eine Einprägung (13) eingearbeitet wird, die radial innerhalb des Grundradius (r₀) angeordnet ist und die mit ihrem radial äußeren Rand an den Grundradius (r₀) angrenzt.

## Claims

1. Method for producing a bearing carrier (1) for a bearing (2), wherein the bearing carrier (2) consists of a metal sheet into which a circular recess (3) for accommodating the outer ring (4) of the bearing (2) is introduced, and wherein the recess has a basic radius (r₀), **characterized in that** the method has the following steps:
a) before the recess (3) is introduced: impressing a depression (5) at at least one circumferential point of the recess (3), wherein the depression (5) has an axially lower first region (6) and an axially higher second region (7), wherein the axially lower first region (6) surrounds the axially higher second region (7) at least partially, in particular in an arcuate manner, and wherein the axially higher second region (7) extends radially along the basic radius (r₀) from a radially outer point (8) to a radially inner point (9);
b) introducing the recess (3);
c) deforming the axially higher second region (7) that remains on the bearing carrier (1) by applying an axially acting deforming force (F) such that at least a part of the remaining second region (7) is displaced radially inwards along the basic radius (r₀) of the recess (3) and forms a protrusion (10).

2. Method according to Claim 1, **characterized in that** according to step a) in Claim 1, a number of depressions (5) are impressed around the circumference of the recess (3).

3. Method according to Claim 2, **characterized in that** the depressions (5) are arranged equidistantly around the circumference of the recess (3).

4. Method according to one of Claims 1 to 3, **characterized in that** the axially lower first region (6) has a circular or oval outer boundary.

5. Method according to one of Claims 1 to 4, **characterized in that** the axially higher second region (7) has an elongate, radially oriented boundary.

6. Method according to one of Claims 1 to 5, **characterized in that** the recess (3) is introduced by a punching process.

7. Method according to one of Claims 1 to 6, **characterized in that**, before a depression (5) is impressed according to step a) in Claim 1, a perforation (11) is worked into a part of the metal sheet that is located radially within the basic radius (r₀).

8. Method according to Claim 7, **characterized in that** the perforation (11) is worked in by a punching process.

9. Method according to Claim 7 or 8, **characterized in that** the perforation (11) extends in the circumferential direction along the entire extent of the axially lower first region (6).

10. Method according to one of Claims 1 to 9, **characterized in that** the first and second regions (6, 7) that have remained on the bearing carrier (1) form a common planar surface (12) after step c) according to Claim 1 has been carried out.

11. Method according to one of Claims 1 to 10, **characterized in that**, before the recess (3) is introduced according to step b) in Claim 1, an impression (13) is worked into the axially higher second region (7), said impression (13) being arranged radially within the basic radius (r₀) and adjoining the basic radius (r₀) with its radially outer periphery.

## Revendications

1. Procédé de fabrication d'un support de palier (1) pour un palier (2), le support de palier (2) se composant d'une tôle dans laquelle est réalisé un évidement circulaire (3) pour recevoir la bague extérieure (4) du palier (2), et l'évidement présentant un rayon de base (r₀), **caractérisé en ce que** le procédé présente les étapes suivantes :
a) avant de réaliser l'évidement (3) : marquer un renfoncement (5) au niveau d'au moins un point périphérique de l'évidement (3), le renfoncement (5) présentant une première région (6) située axialement plus bas et une deuxième région (7) située axialement plus haut, la première région (6) située axialement plus bas entourant la deuxième région (7) située axialement plus haut, au moins en partie, notamment en forme d'arc, et la deuxième région (7) située axialement plus haut s'étendant radialement au-delà du rayon d base (r₀) depuis un emplacement (8) situé radialement à l'extérieur jusqu'à un emplacement (9) situé radialement à l'intérieur ;
b) réaliser l'évidement (3) ;
c) former la deuxième région (7) située axialement plus haut restant sur le support de palier (1) par application d'une force de formage (F) agissant axialement, de telle sorte qu'au moins une partie de la deuxième région (7) restante soit repoussée radialement vers l'intérieur au-delà du rayon de base (r₀) de l'évidement (3) et forme une saillie (10).

2. Procédé selon la revendication 1, **caractérisé en ce que**, selon l'étape a) selon la revendication 1, un certain nombre de renfoncements (5) sont marqués tout autour de la périphérie de l'évidement (3).

3. Procédé selon la revendication 2, **caractérisé en ce que** les renfoncements (5) sont disposés de manière équidistante tout autour de la périphérie de l'évidement (3).

4. Procédé selon l'une quelconque des revendications 1 à 3, **caractérisé en ce que** la première région (6) située axialement plus bas présente une limite circulaire ou ovale extérieure.

5. Procédé selon l'une quelconque des revendications 1 à 4, **caractérisé en ce que** la deuxième région (7) située axialement plus haut présente une limite allongée, orientée radialement.

6. Procédé selon l'une quelconque des revendications 1 à 5, **caractérisé en ce que** la réalisation de l'évidement (3) a lieu par une opération d'estampage.

7. Procédé selon l'une quelconque des revendications 1 à 6, **caractérisé en ce qu'**avant le marquage d'un renfoncement (5) selon l'étape a) selon la revendication 1, un orifice (11) est réalisé dans une partie de la tôle située radialement à l'intérieur du rayon de base (r₀).

8. Procédé selon la revendication 7, **caractérisé en ce que** la réalisation de l'orifice (11) a lieu par le biais d'une opération d'estampage.

9. Procédé selon la revendication 7 ou 8, **caractérisé en ce que** l'orifice (11) s'étend dans la direction périphérique sur toute l'étendue de la première région (6) située axialement plus bas.

10. procédé selon l'une quelconque des revendications 1 à 9, **caractérisé en ce que** les première et deuxième régions (6, 7) restant sur le support de palier (1) selon la réalisation de l'étape c) selon la revendication 1 forment une surface plane commune (12).

11. Procédé selon l'une quelconque des revendications 1 à 10, **caractérisé en ce qu'**avant de réaliser l'évidement (3) selon l'étape b) selon la revendication 1, dans la deuxième région (7) située axialement plus haut, un marquage (13) est réalisé, lequel est disposé radialement à l'intérieur du rayon de base (r₀) et est adjacent avec son bord radialement extérieur au rayon de base (r₀).
